# EUROPÄISCHE PATENTANMELDUNG

(11) **EP 4 678 701 A1**
(43) Veröffentlichungstag der Anmeldung: **14.01.2026**
(21) Anmeldenummer: 24187330.6
(22) Anmeldetag: 09.07.2024
(51) Int. Cl.: C09D 5/00, C09D 5/03

(54) **PULVERLACKFARBEN IN FESTER DARREICHUNGSFORM**

(71) Anmelder: Lignocolor GmbH, 48308 Senden (DE)
(72) Erfinder: PRIETO, Jorge, 48308 Senden (DE); PRIETO, Marcel, 48308 Senden (DE)
(74) Vertreter: Fabry, Bernd

(57) **Zusammenfassung**

Vorgeschlagen werden Pulverlackfarben in fester Darreichungsform, dadurch erhältlich oder erhalten, indem man
(i) ein wasserlösliches oder wasserdispergierbares Farbpulver bereitstellt,
(ii) das Farbpulver auf eine Korngröße entsprechend einem d50-Wert von 5 bis 100 µm vermahlt und
(iii) das Pulver aus Schritt (ii) tablettiert und gegebenenfalls
(iv) die Tabletten aus Schritt (iii) mit einem wässrigen und Wasserlöslichen Überzug beschichtet.

## Beschreibung

### Gebiet der Erfindung

Die Erfindung befindet sich auf dem Gebiet Der Lacke und Farben und betrifft neue Pulverlackfarben, ein Verfahren zu ihrer Herstellung sowie ihre Verwendung.

### Technologischer Hintergrund

Seit den 1980er Jahren verzeichnet die Möbelrestaurierung und -gestaltung einen anhaltenden globalen Trend zur Verwendung von Kreidefarben, sowohl für die Aufarbeitung alter Möbelstücke als auch für die Behandlung neuer Möbel und Holzbauteile. Die Beliebtheit dieser Farben beruht auf ihrem Beitrag zur Werterhaltung antiker Möbel sowie auf der Möglichkeit, eine gewünschte antike und matte Oberflächenoptik zu erzielen. Kreidefarben, die auf Wasserbasis hergestellt werden, enthalten typischerweise einen hohen Anteil an Kreide und anderen mineralischen Pigmenten und Polymerdispersionen, was sie besonders anwendungsfreundlich macht. Zur Lagerkonservierung enthalten sie antimikrobielle Zusätze und in der Regel geringe Mengen an Koaleszensmitteln, was sie im Vergleich zu lösemittelbasierten Lackfarben als umweltfreundliche Alternative auszeichnet.

Die Haltbarkeit von wasserbasierten Kreidefarben in verschlossenen Gebinden wird im Allgemeinen mit 1,5 bis 2,5 Jahren angegeben. Nach dem Öffnen und bei teilweiser Verwendung besteht jedoch ein erhöhtes Risiko der Kontaminierung mit Keimen, was biologischen Abbau und Schimmelbildung zur Folge haben kann. Zum Schutz vor bakteriellem Befall werden häufig Isothiazolinone zugesetzt, die insbesondere bei Allergikern Reizungen und Hautirritationen hervorrufen können. Als Alternative wird in wässrigen Farben bisweilen ein stark alkalischer pH-Wert von bis zu 13 eingestellt, der jedoch auf Holzoberflächen zu Wechselwirkungen mit den Holzinhaltsstoffen und zu Verfärbungen der Beschichtung führen kann. Aufgrund der Reizungs- und Schädigungsgefahr der Haut sowie der Ungeeignetheit für Holzuntergründe sind solche Alternativen für die Anwendung auf Holz nicht zweckmäßig.

Eine potenziell interessante Alternative zu wässrigen Kreidefarben stellen redispergierbare Pulverfarben dar. Jedoch hat sich in der Praxis gezeigt, dass diese Pulverfarben bei der Anwendung auf Holzuntergründen zu technischen Problemen führen können. Die Handhabung der redispergierbaren Pulverfarben, die ausschließlich für mineralische Untergründe wie Wand- und Fassadenanstriche empfohlen werden, erfordert ein sehr aufwendiges Anrühren mit einem Rührwerk oder einer Bohrmaschine mit Rührer, einschließlich der Notwendigkeit, eine Staubmaske zum Schutz vor der Staubentwicklung zu tragen. Diese Notwendigkeit beschränkt die Marktdurchdringung dieser umweltfreundlichen Technologie. Auf Holzarten wie Eiche, Esche, Mahagoni und Meranti führen die auf dem Markt erhältlichen Farben für mineralische Untergründe zu unerwünschten Verfärbungen der Holzbeschichtung, da die Tannine aus dem Holz durch die wässrige Pulverfarbe gelöst und durch die Beschichtung transportiert werden. Der Effekt der Verfärbung ist besonders bei hellen Farbtönen stark sichtbar.

Diese Darstellung des Standes der Technik verdeutlicht die Notwendigkeit für innovative Lösungen, die die genannten Nachteile überwinden und eine sichere, umweltfreundliche und effektive Anwendung von z. B. Kreidefarben auf Holzuntergründen ermöglichen.

### Stand der Technik

EP 3931270 B1 (WACKER) betrifft eine Pulverlackzusammensetzung enthaltend (a) mindestens ein in Wasser redispergierbares Polymerpulver, (b) Pigment und Füllstoff und gegebenenfalls (c) ein oder mehrere Hilfsstoffe und/oder ein oder mehrere hydraulische Bindemittel. Das mindestens eine in Wasser redispergierbare Polymerpulver enthält ein mit Polyvinylalkohol stabilisiertes Copolymer auf Basis von (a1) einem Gewichtsprozent eines Vinylacetats, (a2) einem Gewichtsprozent Ethylen und gegebenenfalls (a3) und/oder (a4), wobei (a3) Vinylester von langkettigen, gegebenenfalls verzweigten C3- bis C12-Carbonsäuren und (a4) weitere damit copolymerisierbare ethylenisch ungesättigte Comonomere sind.

EP 4146747 B1 (WACKER) betrifft ebenfalls eine Pulverlackzusammensetzung, enthaltend (a) mindestens ein in Wasser redispergierbares Polymerpulver, (b) Pigment und Füllstoff und (c) gegebenenfalls weitere Zusatzstoffe, wobei (a) ein mit Polyvinylalkohol stabilisiertes Polymer ist, basierend auf (a1) 20 bis 100 Gewichtsprozent mindestens eines Monomers aus der Gruppe der Acrylester von verzweigten oder unverzweigten Alkoholen mit 1 bis 12 Kohlenstoffatomen, (a2) 0 bis 60 Gewichtsprozent mindestens eines Monomers aus der Gruppe der Methacrylester von verzweigten oder unverzweigten Alkoholen mit 1 bis 12 Kohlenstoffatomen und Styrol, (a3) 0 bis 40 Gewichtsprozent mindestens eines Monomers aus der Gruppe der Vinylester von verzweigten oder unverzweigten Carbonsäuren mit 2 bis 12 Kohlenstoffatomen, und (a4) 0 bis 20 Gewichtsprozent anderer damit copolymerisierbarer ethylenisch ungesättigter Comonomere.

### Aufgabe der Erfindung

Die Aufgabe der vorliegenden Erfindung hat daher darin bestanden, neue Pulverlackfarben, speziell Kreidefarben, in fester darreichungsform zur Verfügung zu stellen, die die oben geschilderten Nachteile nicht aufweisen.

### Beschreibung der Erfindung

Ein erster Gegenstand der Erfindung betrifft Pulverlackfarben in fester Darreichungsform, dadurch erhältlich oder erhalten, indem man
(i) ein wasserlösliches oder wasserdispergierbares Farbpulver bereitstellt,
(ii) das Farbpulver auf eine Korngröße entsprechend einem d50-Wert von 5 bis 100 µm und vorzugsweise 10 bis 30 µm vermahlt und
(iii) das Pulver aus Schritt (ii) tablettiert und gegebenenfalls
(iv) die Tabletten aus Schritt (iii) mit einem wässrigen und wasserlöslichen Überzug beschichtet,
wobei die Tablette anschließend vorzugsweise im Wesentlichen eine Kugelform aufweist. "Im Wesentlichen" hat dabei die Bedeutung, dass die Form der Tablette geringfügig von der Kugelform abweichen kann und beispielsweise ein Ellipsoid darstellt.

Durch die innovative Tablettenform, insbesondere einer Tablette in Kugelform, wird eine effiziente Lösung für die Herausforderungen bestehender redispergierbarer Pulverfarben geboten, indem eine schnelle und einfache Auflösung in Wasser ermöglicht wird, ohne die Notwendigkeit eines Rührwerks und unter Vermeidung von Staubentwicklung. Die Formulierung gewährleistet eine gute Wasserbeständigkeit, exzellente Sperrwirkung gegen tanninhaltige Hölzer, und durch den Einsatz von Haftungspromotoren eine verbesserte Haftfestigkeit, was die Pulverlackfarbe besonders geeignet für die Möbelbeschichtung und andere dekorative Anwendungen macht. Die vorliegende Erfindung zeichnet sich daher insbesondere durch die folgenden Vorteile aus:
- Vereinfachte Anwendung: Die Notwendigkeit für den Einsatz von Rührwerken entfällt, was den Anwendungsprozess erheblich vereinfacht und beschleunigt.
- Reduzierte Staubentwicklung: Die Tablettenform minimiert die Freisetzung von Staubpartikeln, wodurch die Anwendung sicherer und angenehmer wird.
- Homogene Mischung: Die optimierte Form und Rezeptur der Tabletten gewährleisten eine gleichmäßige und homogene Mischung mit Wasser, was zu einer konsistenten Qualität und Optik der Beschichtung führt. Ein besonders wichtiger Vorteil liegt darin, dass sich die Tabletten durch einfache Wasserzugabe in einer Lackdose homogen und schnell auflösen. Das Verfahren umfasst zwei bis dreimaliges Schütteln, gefolgt von einem Stehenlassen der Mischung für 5-10 Minuten. Um die Homogenität der Lösung zu gewährleisten, muss die Dose anschließend nochmals 1 bis 3-mal geschüttelt werden. Diese einfache und effiziente Vorbereitungsmethode unterstreicht die Eignung unserer Erfindung für DIY-Anwendungen, indem sie die Benutzerfreundlichkeit und Zugänglichkeit für Heimwerker betont.
- Umweltfreundlichkeit und Sicherheit: Durch die Eliminierung der Staubentwicklung und die Vereinfachung des Mischprozesses wird auch das Risiko von Inhalation und Hautkontakt mit den Farbpartikeln reduziert, was die Erfindung zu einer umweltfreundlicheren und sichereren Option macht. Außerdem sind die Pulverlackformulierungen nachhaltig, nämlich vollständig lösemittelfrei und einfach an die Kunden zu Versenden und zeigen eine sehr hohe Haltbarkeit/Lagerstabilität auf.

Die Farbpulver, die die Grundlage der Lackfarben bilden, enthalten trockene oder vorzugsweise sprühgetrocknete Komponenten, die insbesondere aber nicht ausschließlich ausgewählt sind aus der Gruppe, die gebildet wird von in Wasser redispergierbarer Polymerpulver, Pigmenten, Füllstoffen, Haftungspromotoren, Dispergiermittel und Sprengmitteln.

### Redispergierbare Polymerpulver

In Wasser redispergierbare Polymerpulver-Zusammensetzungen (Dispersionspulver) werden im Allgemeinen durch (Sprüh-)Trocknung der entsprechenden wässrigen Dispersionen eines Basispolymerisats hergestellt. Die Herstellung der wässrigen Dispersion des Basispolymerisats erfolgt vorzugsweise mittels radikalisch initiierter Emulsionspolymerisation von einem oder mehreren ethylenisch ungesättigten Monomeren. Der damit erhaltenen wässrigen Dispersion des Basispolymerisats wird anschließend, vorzugsweise in Gegenwart von einer Trocknungshilfe (im Allgemeinen ein Schutzkolloid), das Wasser entzogen, wobei eine Restfeuchte von maximal 5 Gew.-%, vorzugsweise jedoch weniger als 1 Gew.-% angestrebt wird. Gegebenenfalls können während oder nach der Trocknung noch Antiblockmittel oder weitere Additive zugegeben werden. Aufgrund des Schutzkolloidanteils wird zum einen beim Trocknungsvorgang verhindert, dass die Polymerteilchen irreversibel verkleben, da die Polymerteilchen von den Schutzkolloid-Teilchen umhüllt werden. Zum anderen bewirkt diese Schutzkolloid-Matrix, welche sich beim Dispergieren der Polymerpulverzusammensetzung in Wasser wieder auflöst, dass die Polymerpartikel wieder mit der Partikelgröße der Ausgangsdispersion in der wässrigen Dispersion vorliegen.

Das in Wasser redispergierbare Polymerpulver wird vorzugsweise mittels radikalisch initiierter wässriger Emulsionspolymerisation von Monomeren der Gruppe (a1) und gegebenenfalls weiteren Comonomeren der Gruppen (a2), (a3) und/oder (a4) sowie anschließender Sprühtrocknung der so erhaltenen wässrigen Dispersion des Mischpolymerisats erhalten.

### Monomere

Im Allgemeinen werden als Monomere, die die Gruppe (a1) bilden, 20 bis 100 Gew.-% und vorzugsweise 30 bis 70 Gew.-% von wenigstens einer ungesättigten Verbindung aus der Gruppe bestehend aus Acrylsäureester von verzweigten oder unverzweigten Alkoholen mit 1 bis 12 C-Atomen copolymerisiert, wobei sich die Gewichtsangaben auf das Gesamtgewicht des Polymers beziehen. Bevorzugte Acrylsäureester sind Methylacrylat, Ethylacrylat, Propylacrylat, n-Butylacrylat, t-Butylacrylat, 2-Ethylhexylacrylat. Besonders bevorzugt sind Methylacrylat, n-Butylacrylat und 2-Ethylhexylacrylat.

### Comonomere

Die Polymere können des Weiteren bis zu 60 Gew.-% und vorzugsweise 30 bis 60 Gew.-% von Comonomeren der Gruppe (a2) enthalten, die gebildet wird von Methacrylsäureestern von verzweigten oder unverzweigten Alkoholen mit 1 bis 12 C-Atomen sowie Styrol. Bevorzugte Methacrylsäureester sind Methylmethacrylat, Ethylmethacrylat, Propylmethacrylat, n-Butylmethacrylat. Besonders bevorzugt sind Methylmethacrylat und Styrol. Auch hier beziehen sich die Gewichtsangaben auf das Gesamtgewicht des Polymers.

Ferner können die Polymere auch bis zu 60 Gew.-%, vorzugsweise 5 bis 40 Gew.-% Comonomere der Gruppe (a3) enthalten, die Vinylester von verzweigten oder unverzweigten Carbonsäuren mit 2 bis 12 C-Atomen umfasst. Auch hier beziehen sich die Gewichtsangaben auf das Gesamtgewicht des Polymers. Bevorzugte Vinylester sind Vinylacetat, Vinylpropionat, Vinylbutyrat, Vinyl-2-ethylhexanoat, Vinyllaurat, 1-Methylvinylacetat, Vinylpivalat, Vinylester der Neodecansäure, und Vinylester von alpha-verzweigten Monocarbonsäuren mit 5 bis 12 C-Atomen, beispielsweise VeoVa9^{®} oder VeoVal0^{®} (Handelsnamen der Firma Resolution) oder VERSA10^{®} (Handelsname der Wacker Chemie AG). Besonders bevorzugt sind Vinylacetat, Vinyllaurat, Vinylester der Neodecansäure und die Vinylester von alpha-verzweigten Carbonsäuren mit 9 oder 10 C-Atomen (VeoVa9^{®}, VeoVal0^{®} oder VERSA10^{®}). Am meisten bevorzugt sind Vinylacetat und Vinyllaurat.

Ferner können die Polymere auch bis zu 20 Gew.-%, vorzugsweise 0,1 bis 10 Gew.-% Comonomere der Gruppe (a4) enthalten. Auch hier beziehen sich die Gewichtsangaben auf das Gesamtgewicht des Polymers. Beispiele für diese Gruppe sind ethylenisch ungesättigte Mono- und Dicarbonsäuren, vorzugsweise Fumarsäure; ethylenisch ungesättigte Carbonsäureamide und -nitrile, vorzugsweise Acrylamid und Acrylnitril; Diester der Fumarsäure wie die Diethyl- und Diisopropylester, ethylenisch ungesättigte Sulfonsäuren und deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Al kylether wie der Isobutoxyether oder Ester des N-Methylolacrylamids, des N-Methylol-methacrylamids und des N-Methylolallylcarbamats. Geeignet sind auch epoxidfunktionelle Comonomere wie Glycidylmethacrylat (GMA) und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können, insbesonders Vinyltrimethoxysilan und Vinyltriethoxysilan und Methacryloxypropyltrimethoxysilan. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere Beispiele sind auch Vinylether, wie Methyl-, Ethyl- oder iso-Butylvinylether.

Bevorzugte Comonomere, die die Gruppe (a4) bilden, sind die ethylenisch ungesättigten Mono- und Dicarbonsäuren wie Acrylsäure, Methacrylsäure und Maleinsäure(anhydrid), die ethylenisch ungesättigten Sulfonsäuren und deren Salze wie Vinylsulfonsäure, die epoxidfunktionellen Comonomere wie Glycidylmethacrylat, die siliciumfunktionellen Comonomere wie Vinyltrimethoxysilan, Vinyltriethoxysilan und Methacryloxypropyltrimethoxysilan, sowie Gemische der genannten Hilfsmonomere. Vorzugsweise werden keine mehrfach ethylenisch ungesättigte Comonomere copolymerisiert. Besonders bevorzugt sind die epoxidfunktionellen und die siliciumfunktionellen Comonomere, sowie Kombinationen von epoxidfunktionellen und siliciumfunktionellen Comonomeren).

Bevorzugt werden Polymerisate von 90 bis 100 Gew,-% von wenigstens einem Monomer (a1) und gegebenenfalls noch 0,1 bis 10 Gew.-% ein oder mehrere Comonomere (a4). Eingesetzt. Die Angaben in Gew.-% beziehen sich auch hier jeweils auf das Gesamtgewicht der Comonomere und addieren sich jeweils auf 100 Gew.-%. Besonders bevorzugt sind die Polymerisate von n-Butylacrylat oder 2-Ethylhexylacrylat oder deren Gemische, gegebenenfalls mit einem oder mehreren Comonomeren (a4).

Bevorzugt sind auch Mischpolymerisate von 30 bis 70 Gew.-% von wenigstens einem Monomer der Gruppe (a1), 30 bis 60 Gew.-% von wenigstens einem Comonomer der Gruppe (a2) und gegebenenfalls noch 0,1 bis 10 Gew.-% ein oder mehrere Comonomere der Gruppe (a4). Besonders bevorzugt sind die Mischpolymerisate von n-Butylacrylat und/oder 2-Ethylhexylacrylat als Monomer (a1) mit Methylmethacrylat und/oder Styrol als Monomer (a2) und gegebenenfalls noch 0,1 bis 10 Gew.-% ein oder mehrere Comonomere (a4).

In einer weiteren Ausführungsform sind auch Mischpolymerisate bevorzugt, die 30 bis 70 Gew.-% von wenigstens einem Monomer der Gruppe (a1), 30 bis 60 Gew.-% von wenigs-tens einem Monomer der Gruppe (a2), 5 bis 40 Gew.-% von wenigstens einem Monomer der Gruppe (a3), und gegebenenfalls noch 0,1 bis 10 Gew.-% ein oder mehrere Comonomere aus der Gruppe (a4) enthalten. Besonders bevorzugt sind die Mischpolymerisate von n-Butylacrylat und/oder 2-Ethylhexylacrylat als Monomer (a1) mit Methylmethacrylat und/oder Styrol als Monomer (a2) und Vinylacetat und gegebenenfalls weitere von Vinylacetat verschiedene Vinylester als Comonomer (a3), und gegebenenfalls noch 0,1 bis 10 Gew.-% ein oder mehrere Comonomere aus der Gruppe (a4).

### Emulsionspolymerisation

Die Herstellung der wässrigen Dispersionen des Polymerisats erfolgt üblicherweise nach dem Emulsionspolymerisationsverfahren, wobei die Polymerisationstemperatur im Allgemeinen 40 bis 120 °C, und vorzugsweise 60 bis 90 °C beträgt und wobei bei einem Druck von im Allgemeinen 5 bis 100 bar abs. gearbeitet wird. Die Initiierung der Polymerisation erfolgt vorzugsweise mit den für die Emulsionspolymerisation gebräuchlichen Redoxinitiator-Kombinationen. Beispiele für geeignete Oxidationsinitiatoren sind die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der Monomere, eingesetzt. Geeignete Reduktionsmittel sind beispielsweise Natriumhydroxymethansulfinat (Brueggolit) und (Iso-)Ascorbinsäure. Die Reduktionsmittelmenge beträgt vorzugsweise 0,01 bis 3 Gew.-%, bezogen auf das Gesamtgewicht der Monomere. Die genannten Oxidationsmittel, insbesondere die Salze der Peroxodischwefelsäure, können auch alleinig als thermische Initiatoren ein gesetzt werden.

In einer bevorzugten Ausführungsform erfolgt die Polymerisation in Gegenwart von 2 bis 10 Gew.-%, bezogen auf das Gesamtgewicht der Comonomeren, eines oder mehrerer, teilverseifter und niedermolekularer Polyvinylalkohole mit einem Hydrolysegrad von jeweils 80 bis 95 Mol-% und einer Hoeppler-Viskosität, in 4 %-iger wässriger Lösung, von jeweils 1 bis 5 mPas (Methode nach Hoeppler bei 20 °C, DIN 53015). Der Hydrolysegrad der teilverseiften und niedermolekularen Polyvinylalkohole beträgt vorzugsweise 85 bis 90 Mol-%, besonders bevorzugt 87 bis 89 Mol-%. Die Hoeppler-Viskosität in 4 %-iger wässriger Lösung, der teilverseiften und niedermolekularen Polyvinylalkohole, beträgt vorzugsweise 2 bis 4 mPas (Methode nach Hoeppler bei 20 °C, DIN 53015). Gegebenenfalls können auch teilverseifte und höhermolekulare Polyvinylalkohole mit einem Hydrolysegrad von vorzugsweise 80 bis 95 Mol-% und einer Hoeppler-Viskosität in 4 %-iger wässriger Lösung von 6 bis 40 mPas (Methode nach Hoeppler bei 20 °C, DIN 53015) alleine oder im Gemisch mit den teilverseiften und niedermolekularen Polyvinylalkoholen eingesetzt werden. Die genannten Polyvinylalkohole sind im Handel erhältlich und dem Fachmann zugänglich.

### Emulgatoren

Gegebenenfalls können zusätzlich noch geringe Mengen an Emulgatoren, beispielsweise anionische und/oder nichtionische Emulgatoren, bei der Polymerisation verwendet werden, beispielsweise 0,1 bis 2,0 Gew.-%, bezogen auf das Gesamtgewicht der Comonomeren. Beispiele für anionische Emulgatoren sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen. Beispiele für nichtionische Emulgatoren sind C12-Ci4-Fettalkoholethoxylate mit einem Ethoxylierungsgrad von 3 bis 20 Ethylenoxid-Einheiten. Vorzugs weise werden während der Polymerisation keine Emulgatoren verwendet, und auch keine Emulgatoren nachträglich zugegeben.

### Trocknung

Das in Wasser redispergierbare Polymerpulver wird anschließend mittels Trocknung der entsprechenden zuvor hergestellten und vorstehend beschriebenen wässrigen Dispersionen des Polymerisats hergestellt. Die Trocknung erfolgt vorzugsweise mittels Sprühtrocknung, gegebenenfalls wieder in Gegenwart des Gemisches aus mindestens einem Polyvinylalkohol mit einem Hydrolysegrad von 80 bis 95 Mol-% und einer Viskosität nach Hoeppler von 1 bis 5 mPas, und mindestens einem Polyvinylalkohol mit einem Hydrolysegrad von 80 bis 95 Mol-% und einer Viskosität nach Hoeppler von 6 bis 40 mPas. Die Polyvinylalkohole werden dabei in einer solchen Menge eingesetzt, dass deren Gewichtsanteil im Polymerpulver insbesondere 2 bis 30 Gew.-%, bezogen auf das Gewicht des Polymerisats beträgt. Das Mengenverhältnis des Anteils an niederviskosem Polyvinylalkohol zu höher viskosem Polyvinylalkohol kann 1: 50 bis 50: 1, vorzugsweise von 1: 10 bis 10: 1 betragen.

Die Sprühtrocknung erfolgt mittels Zerstäubung im Sprühtrockner. Als Trocknungsgas wird im Allgemeinen Luft eingesetzt. Zur Beschleunigung der Trocknung wird das Trocknungsgas typischerweise vorerwärmt, vorzugsweise auf eine Eintrittstemperatur von 130 bis 210 °C (Heißluft). Im Allgemeinen werden noch Antiblockmittel zugegeben. Geeignete Antiblockmittel (Antibackmittel) sind dem Fachmann bekannt, beispielsweise Aluminiumsilikate wie Kaolin, pyrogene Kieselsäure oder gefällte Kieselsäure oder Carbonate wie Calciumcarbonat oder Magnesiumcarbonat. Die Antiblockmittel werden im Allgemeinen in einer Menge von 0,1 bis 30 Gew.-%, vorzugsweise 2 bis 30 Gew.-%, besonders bevorzugt 7 bis 30 Gew.-%, jeweils bezogen auf das Gesamtgewicht der polymeren Bestandteile (Polymerisat und gegebenenfalls Polyvinylalkohole) der zu zerstäubenden Polymerdispersion eingesetzt. Gegebenenfalls kann das Antiblockmittel auch ganz oder teilweise dem fertig getrockneten Polymerpulver vor oder nach dessen Abscheidung vom Trocknungsgas zugegeben werden. Nach der Trocknung weisen die Pulver in der Regel noch eine Restfeuchte von maximal 5 Gew.-%, vorzugsweise jedoch von 0,5 bis 1,5 Gew.-%

Zur Optimierung der Viskosität und zur Optimierung der Deckkraft der mit den Pulverfarben erhältlichen Dispersionsfarben werden bevorzugt in Wasser redispergierbare Polymerpulver, die die Komponente (a) bilden, mit einem Polyvinylalkohol-Anteil von 10 bis 30 Gew.-%, vorzugsweise 20 bis 30 Gew.-%, jeweils bezogen auf das Gewicht des Mischpolymerisats, in der Pulverfarben-Rezeptur verwendet. Diese in Wasser redispergierbaren Polymerpulver (a) mit erhöhtem Polyvinylalkohol-Anteil können alleine oder im Gemisch mit einem in Wasser redispergierbaren Polymerpulver a) mit geringerem Polyvinylalkohol-Anteil in der Pulverfarben-Rezeptur verwendet werden.

### Bindemittel

Die Pulverfarben-Zusammensetzung kann auch ein oder mehrere mineralische Bindemittel (Komponente b) enthalten, beispielsweise Zement (Portland-, Aluminat-, Huetten-, Magnesia-, Phosphatzement), Gips und Kalk. Der Anteil an mineralischem Bindemittel beträgt vorzugsweise 0,1 bis 10 Gew.-%, bezogen auf das Gesamtgewicht der Pulverfarben-Zusammensetzung. Durch Zugabe von Zement oder Kalk zu der trockenen Formulierung kann auch gezielt und nach Bedarf der pH-Wert einer Pulverfarbe eingestellt werden.

Eine Pulverfarbe enthält zusätzlich zu dem polymeren Bindemittel (a) und gegebenenfalls mineralischem Bindemittel (b) weiterhin Pigmente (Komponente c), Füllstoffe (Komponente d) sowie gegebenenfalls noch Zusatzstoffe wie Netz- und Dispergiermittel, Verdicker, Entschäumer, pH-Stellmittel sowie Sprengmittel.

### Pigmente

Geeignete Pigmente (Komponente c) und deren Mengenanteile in einer Pulverfarben-Rezeptur sind dem Fachmann bekannt. Beispiele für Pigmente sind anorganische Pigmente wie Titandioxid, Bariumsulfat, Bornitrid und Zinkoxid für weiße Dispersionsfarben. Der Mengenanteil der Pigmente in der Pulverfarben-Zusammensetzung beträgt im Allgemeinen 1 bis 35 Gew.-%, vorzugsweise 5 bis 15 Gew.-%, jeweils bezogen auf das Gesamtgewicht der Pulverfarben-Zusammensetzung.

Um einen bestimmten reproduzierbaren Ton einer Farbe zu erreichen, müssen Pigmente auf einen bestimmten Partikeldurchmesser zerkleinert und homogen in die Farbbasis eingearbeitet werden. Die Zerkleinerung erfordert den Einsatz von speziellem Equipment, wie zum Beispiel Pigmentmühlen. Die Einarbeitung des Pigments in die Farbe erfolgt dann in einem Dispergier-Schritt. Aufgrund der Komplexität dieses Prozesses, werden vorzugsweise Pigmentpräparationen (auf Wasser- oder Lösemittel-Basis) hergestellt, in denen die Pigmente bereits auf den notwendigen Durchmesser zerkleinert sind, und diese fest-flüssig-Dispersionen mit Tensiden und oder Dispergiermitteln stabilisiert sind. Die Einarbeitung eines solchen Paste ist wesentlich einfacher und bedarf keines hohen Energieaufwandes, und die Durchmischung bis zur vollständigen Homogenisierung ist ausreichend. Die Verwendung einer solchen Pigmentpaste auf wässriger Basis zur Abtönung einer Pulverfarbe nach der Zugabe von Wasser, kurz vor Applikation, ist möglich.

Allerdings enthalten solche Pigmentpasten häufig Biozide, die in die Raumluft emittiert und Allergien hervorrufen können. Aus diesem Grund empfiehlt es sich solche Pigmente auszusuchen, die ohne einen hohen Scheraufwand für das Einarbeiten genutzt werden können. Solche Pigmente sind als Easy-to-Disperse Pigmentpulver bekannt. Bei Easy-to-Disperse (ED) Pigmentpulvern wird die Partikeloberfläche mit Tensiden bzw. Dispergiermitteln modifiziert, was die Oberflächenenergie z.B. im wässrigen Medium auf ein Minimum herabsetzt und die Einarbeitung von Pigmenten in die Farbformulierung bei sehr niedrigem Scheraufwand ermöglicht. Bekannt sind bereits auf dem Markt verfügbare ED-Pigmentpulver von Clariant (EDS und EDW-Pigmente) und von Sun Chemical.

Verzichtet man auf die Abtönung und bleibt bei der weißen Farbe, kann man auf das oberflächenmodifizierte leicht zu dispergierende Titandioxid zurückgreifen (beispielsweise Kronos 2190 oder Tiona 828 von Tronox) oder auf Titandioxid-Ersatzprodukte auf Basis von Zinksulfid und dessen Kombinationen mit Bariumsulfat, Kaolinen, hexagonalem Bornitrid.

### Füllstoffe

Geeignete Füllstoffe (Komponente d) sind beispielsweise Carbonate wie Calciumcarbonat in Form von Kreide, Dolomit und Calcit. Geeignet sind auch Silikate wie Quarzmehl, Feldspat, Kaolin und Talkum. Geeignet sind auch Faserfüllstoffe wie Cellulosefasern. In der Praxis werden häufig Gemische von Füllstoffen eingesetzt. Der Mengenanteil der Füllstoffe in der Pulverfarben-Zusammensetzung beträgt im Allgemeinen 20 bis 95 Gew.-%, vorzugsweise 30 bis 60 Gew.-%, jeweils bezogen auf das Gesamtgewicht der Pulverfarben-Zusammensetzung.

Die Formulierung einer Pulverfarbe unterscheidet sich prinzipiell von der Formulierung einer flüssigen Farbe aufgrund der Unterschiede in dem Herstellungsprozess. Eine flüssige Farbe wird in einem Mischreaktor mittels einem Dispergierprozess hergestellt. Füllstoffe und Pigmente werden dabei hohen Scherkräften ausgesetzt, die die Zerstörung von Partikel-Agglomeraten fördern, die Homogenität der flüssigen Farbe und die Oberflächenqualität der getrockneten Farbschicht verbessern. Dieser Dispergierschritt nimmt je nach Konstruktion und angestrebter Qualität der Farbe mehrere Minuten bis Stunden in Anspruch.

Eine Pulverfarbe dagegen wird aus trockenen Komponenten vollständig formuliert, und Wasser wird lediglich im letzten Schritt zugegeben. Erfolgt die Zugabe des Wassers außerhalb der Farbproduktionsstätte, so ist die Möglichkeit der Dispergierung mit einer hochscherenden Apparatur nicht gegeben. Für die Herstellung einer Farbe unmittelbar vor dem Applizieren stehen dem Verarbeiter im Allgemeinen ein Handrührgerät mit einer Mischrührwelle und wenige Minuten Zeit zur Verfügung. Der damit erreichbare Scheraufwand ist nicht ausreichend, um Partikel-Agglomerate zu zerstören und den gewünschten Homogenisierungsgrad zu erreichen. Deswegen sollten die Füllstoff- und/oder Pigment-Komponenten so gewählt werden, dass diese sich bei geringem Scheraufwand gut mit Wasser verrühren lassen und möglichst keine Agglomerate enthalten. Bei Füllstoffen und Pigmenten sollte auf die Oberflächenbeschaffenheit geachtet werden. Raue Oberflächen mit Kavitäten unterstützen die Agglomeration von Partikeln. Versucht man die Desagglomeration mit Zugabe von einer amphiphilen Substanz (Dispergiermittel) zu beschleunigen, wird viel mehr Substanz benötigt. Hier rechnet man Substanzbedarf pro Fläche, die mit einer Monolayer aus amphiphilen Molekülen belegt wird. Je höher die Rauigkeit, desto größer die Oberfläche und desto höher Bedarf an Dispergiermitteln. Für Pulverfarben sollte man aus diesen Überlegungen Füllstoffe aussuchen, die bereits mit einer amphiphilen Substanz oberflächenbehandelt sind. Diese lassen sich wesentlich leichter mit einem geringen Scheraufwand redispergieren und benötigen weniger Dispergiermittelzugabe.

Bei flüssigen Farben werden daher Füllstoffe unterschiedlicher Korngröße kombiniert, um eine möglichst dichte Packung zu erreichen und die Deckfähigkeit zu verbessern. Denselben Ansatz kann man auch bei der Formulierung einer Pulverfarbe verfolgen, jedoch sollten Füllstoffe und Pigmente möglichst kleiner Korngrößen von vorzugsweise 0,1 bis 2 µm gewählt werden. Wenn man auf kleine Korngrößen zurückgreift, kann eine ähnliche Deckfähigkeit auch ohne bimodaler Korngrößenverteilung erreicht werden. Besonders bevorzugt werden Füllstoffe mit einer Korngröße von 0,20 bis 0,35 µm. Kleinere Korngrößen bedürfen wiederum keiner intensiven Redispergierung, um eine gute homogene Oberflächenqualität zu erzielen.

### Additive

Weitere Additive (Komponente e) umfassen Netz- und Dispergiermittel, Verdickungsmitteln, Entschäumer, Hydrophobierungsmittel, Filmbildehilfsmittel, pH-Stellmittel sowie Sprengmittel. Solche Zusatzstoffe sind im Handel erhältlich und deren Einsatzmengen sind dem Fachmann bekannt.

### Dispergier- und Netzmittel

Beispiele für Dispergiermittel und Netzmittel sind Natrium- und Kalium-Polyphosphate sowie Polyacrylsäuren und deren Salze. Diese werden im Allgemeinen in Anteilen von 0,1 bis 1 Gew.-%, bezogen auf das Gesamtgewicht der Pulverfarben-Zusammensetzung eingesetzt. Diese Stoffe erleichtern den Dispergierprozess von Pigmenten und Füllstoffen. Auf der molekularen Ebene besitzen Netz- und Dispergiermittel einen amphiphilen Charakter, das heißt, dass ein Teil des Moleküls hydrophil und ein anderes lipophil ist, beziehungsweise sich unterschiedliche Teile des Moleküls in Medien mit unterschiedlichen Polaritäten lösen. Amphiphile Moleküle stellen einen thermodynamisch günstigen Zustand an den Grenzflächen zwischen Medien unterschiedlicher Polarität her. Ein Beispiel für solche Grenzflächen ist die Oberfläche eines Pigmentes oder Füllstoffes, welche sich in wässrigem Medium befinden. Amphiphile Moleküle werden an der Oberfläche eines Pigments adsorbiert, sofern sie entsprechende Gruppen aufweisen, die Wechselwirkungen mit dem Pigment eingehen. Somit unterstützen amphiphile Moleküle die Benetzung, Dispergierung und Stabilisierung von Pigment- und Füllstoffpartikeln im Wasser.

Die Mittel werden je nach Beschaffenheit der hydrophilen Gruppen in ionische (kationische und anionische), nichtionische und amphotere Verbindungen unterteilt. In der Regel werden für die Formulierung von Farben makromolekulare, ionische Verbindungen als Dispergiermittel verwendet. Solche Moleküle sind jedoch aufgrund der Größe diffusionsträge und zeigen eine relativ langsame Benetzungskinetik. Außerdem reagieren ionische Verbindungen relativ empfindlich auf Anwesenheit von Salzen im Wasser, ändern ihr thermodynamisches Phasenverhalten und können durch ionische Abschirmung ihre Stabilisierungseigenschaften verlieren. Ionische Amphiphile lösen sich bei niedrigen Temperaturen schlecht im Wasser, während nichtionische genau das umgekehrte Phasenverhalten zeigen und sich im Wasser lösen. Das Phasenverhalten nichtionischer Amphiphile ändert sich nur langsam durch Salz-Zugabe und zeigt daher in Medien mit hoher lonenkonzentrationen gute Dispergiereigenschaften.

Aus diesen Überlegungen empfiehlt es sich für die Formulierung von Pulverfarben eine Kombination aus ionischen und nichtionischen Netz- und Dispergiermitteln zu verwenden. Eine solche Mischung zeigt hervorragende Stabilisierungseigenschaften, und durch synergistische Effekte kann die Oberflächenspannung und somit die Oberflächenenergie auf ein Minimum herabgesetzt werden. Berücksichtigt man die Benetzungskinetik, sollte ein Teil des Amphiphiles mit einer relativ niedrigen Molmasse gewählt werden, um die Benetzung bei Wasserzugabe zu Pulverfarbe aufgrund der schnelleren Verteilungskinetik in der Bulk-Phase und Adsorptions-Kinetik auf Oberflächen von Pigmenten zu beschleunigen. Das Verhältnis zwischen ionischen und nichtionischen Amphiphil- Anteilen kann experimentell ermittelt werden, indem man die Qualität der Farbe nach bestimmten konstanten Misch-Zeit und Energieeintrag beim Rühren misst.

### Weitere Hilfs- und Zusatzstoffe

Beispiele für Verdickungsmittel und Schutzkolloide sind Celluloseether wie Carboxymethylcellulose, Hydroxyethylcellulose, Stärke und Polyvinylalkohol. Bentonit ist ein Beispiel für ein anorganisches Verdickungsmittel. Die Verdickungsmittel und Schutzkolloide werden im Allgemeinen in einer Menge von jeweils 0,01 bis 2 Gew.-% bezogen auf das Gesamtgewicht der Pulverfarbe eingesetzt. Bei Verdickungsmitteln, Schutzkolloiden und auch bei Entschäumern und pH-Stellmittel ist die Auswahl für die Pulverfarbe ähnlich der für die flüssige Farbe, allerdings sollten die Substanzen in Pulverform verfügbar sein. Die Rheologie der Pulverfarbe unterscheidet sich von der der flüssigen Farbe, insbesondere im high shear Bereich, indem sie in diesem Bereich höher ausfällt. Die Auswahl eines Verdickers sollte daher nach Messung des rheologischen Verhaltens gemacht werden.

Beispiele für Hydrophobierungsmittel sind Silane und Fettsäureester. Beispiele für Entschäumer sind Silikonöle und Polyglykole.

Beispiele für Filmbildehilfsmittel sind Esteralkohol-Gemische wie Texanol^{®}.

Beispiele für Stellmittel sind Silikonate wie Kaliummethylsilikonate, Amine, Polyamine, und Polyethylenimine.

Geeignete Sprengmittel, die die Auflösung der Tabletten unterstützen, indem sie beispielsweise durch Wasseraufnahme quellen (z.B. Stärke, Cellulosederivate, Alginate, Polysaccharide, Dextrane, vernetztes PVP) oder durch eine chemische Reaktion Gas entwickeln (z.B. Natriumhydrogencarbonat, Zitronensäure, Weinsäure).

Es sind sowohl Formulierungen mit als auch ohne die genannten weiteren Hilfsstoffe möglich.

In einer besonders bevorzugten Ausführungsform der vorliegenden Erfindung weisen die Farbpulver die folgende Zusammensetzung auf:
(a) 7 bis 40 % und vorzugsweise etwa 18 bis etwa 30 Gew.-% redispergierbares Polymerpulver
(b) etwa 0,1 bis etwa 10 Gew.-% und vorzugsweise etwa 1 bis etwa 5 Gew.-% Bindemittel;
(c) etwa 1 bis etwa 35 Gew.-% und vorzugsweise etwa 5 bis etwa 15 Gew.-% Pigmente; und
(d) etwa 20 bis etwa 95 Gew.-% und vorzugsweise, etwa 20 bis etwa 50 Gew.-% Füllstoffe,
wobei sich die Mengenangaben gegebenenfalls mit weiteren Hilfs- und Zusatzstoffen zu 100 Gew.-% ergänzen. Der guten Ordnung halber sei darauf hingewiesen, dass Zusammensetzungen, die sich zu weniger als 100 Gew.-% oder mehr als 100 Gew.-% ergänzen, nicht von der Erfindung umfasst sind. Der Fachmann ist zudem in der Lage, aufgrund der vorliegenden Beschreibung eine ausreichende Anzahl von Formulierungen zu ermitteln, deren Mengen an Bestandteilen die sich zu 100 Gew.-% ergänzen, ohne hierzu erfinderisch tätig werden zu müssen.

### Herstellverfahren

Ein weiterer Gegenstand der Erfindung betrifft ein Verfahren zur Herstellung von Pulverlackfarben in fester Darreichungsform, umfassend oder bestehend aus den folgenden Schritten:
(i) Bereitstellen eines wasserlöslichen Farbpulvers,
(ii) Vermahlen des Farbpulvers auf eine Korngröße entsprechend einem d50-Wert von 5 bis 100 µm und vorzugsweise 10 bis 30 µm; und
(iii) Tablettierung des Pulvers aus Schritt (ii) sowie gegebenenfalls
(iv) Beschichtung der Tabletten aus Schritt (iii) mit einem wässrigen und wasserlöslichen Überzug.

### Herstellung der Pulverfarben

Der erste Schritt zur Herstellung der erfindungsgemäßen Darreichungsformen besteht in der Bereitstellung der Farbpulver. Hierzu können die einzelnen Bestandteile in Form deren feinteiligen Pulver in einem Pulvermischer miteinander vermischt werden. Alternativ dazu kann auch so vorgegangen werden, dass die Bestandteile (b) (c), (d) und gegebenenfalls weitere Zusatzstoffe der Pulverfarben-Zusammensetzung zusammen mit der wässrigen Dispersion des redispergierbaren Polymerpulvers (a) vermischt werden, und diese wässrige Mischung anschließend sprühgetrocknet wird. Dabei wird eine Pulverfarben-Zusammensetzung erhalten, welche sich durch besonders gute Dispergierbarkeit in Wasser auszeichnet. Das zuletzt ge nannte Verfahren zeichnet sich durch die Reduktion der Staubbildung während der Herstellung der Pulverfarben-Zusammensetzung aus.

### Vermahlung

Zur Herstellung einer einerseits ausreichend stabilen, andererseits aber auch leicht dispergierbaren Tablette, müssen die Komponenten - also das zuvor hergestellte Farbpulver, auf eine annähernd einheitliche Korngröße vermahlen werden. Eine Tablette mit zu grobkörnigen Bestandteilen, löst sich nicht schnell genug auf, sind die Komponenten zu feinteilig, weist die Tablette eine zu geringe Stabilität auf und zerbröselt leicht. Das gleiche gilt, wenn die Bestandteile zu unterschiedliche Größen aufweisen. Als optimal hat sich herausgestellt, die Farbpulver so zu vermahlen, dass die Korngröße entsprechend einem d50-Wert von 5 bis 30 µm und vorzugsweise 10 bis 30 µm liegt. Der Begriff "D50" ist so zu verstehen, dass mindestens 50 % der Teilchen eine Größe innerhalb des angegebenen Bereichs aufweisen. Die Zerkleinerung kann beispielsweise in einer Kugelmühle, einer Strahlmühle (Jet Mill), einer Rotor-Sichtermühle, einer Prallmühle (Impact Mill) odereiner Planetenmühle erfolgen.

### Tablettierung

Im abschließenden Schritt werden die vermahlenen Farbpulver zu einer Tablette verpresst. Dies kann in den dafür einschlägig bekannten Presswerkzeugen erfolgen, wie beispielsweise den TPR-Tablettenpressen von Syntegon. Solche Pressen werden üblicherweise sowohl im Detergensbereich (z.B. Geschirrspülmaschinen-Tabs) als zur Herstellung von pharmazeutischen Produkten großtechnisch, wie auch im kleinen Maßstab eingesetzt. Im Hinblick auf eine besonders schnelle Auflösung hat es sich als besonders vorteilhaft herausgestellt, wenn man Tabletten herstellt, die ein Kugelform oder eine angenäherte Kugelform aufweisen, da diese eine besonders große Oberfläche aufweisen.

### Beschichtung

Optional könnten wir die Tabletten nach der Pressung mit einem wässrigen und wasserlöslichem Spezial-Coating beschichten. Dadurch entstehen die sogenannten "Filmtabletten", die im Falle der Pulverlackfarben folgende Vorteile aufweisen können:
- Schutz vor Zerstörung im Gebinde: Die Beschichtung bietet mechanischen Schutz, wodurch die Tabletten während des Transports und der Lagerung weniger anfällig für Bruch und Abrieb sind.
- Verbesserte Stabilität: Die Beschichtung schützt die Tabletten vor Feuchtigkeit, Sauerstoff und anderen Umwelteinflüssen, wodurch die Haltbarkeit und Stabilität der Pulverfarben während der Lagerung weiter erhöht wird.
- Kontrollierte Auflösung: Durch die Auswahl geeigneter Bindemittel in der Spritzbeschichtung kann die Auflösungsrate der Tabletten weiter angepasst werden. Bei Verwendung von Bindemitteln, die eine Quellung ermöglichen, kann die Beschichtung die Tabletten schneller auflösen lassen.
- Verbesserte Handhabung: Beschichtete Tabletten sind noch weniger staubig und leichter zu handhaben, was die Effizienz in der Produktion und Anwendung erhöht.
- Ästhetische Vorteile und Kolorierung der Pulverlackfarbe: Die Beschichtung kann farblich angepasst werden, um die Tabletten ästhetisch ansprechend und unterscheidbar zu machen. Ebenso könnte die Beschichtung der Tablette zur Farbgebung der Pulverlackfarbe beitragen.

Beispiele für geeignete Überzugsmaterialien sind beispielsweise wasserlösliche Polymere, wie etwa Polyacrylamid (PAM), auch als Copolymer mit anionischen oder kationischen Monomeren, Polyacrylsäure-Homopolymer und sein Natriumsalz (P-AA), Acrylsäure/Maleinsäure-Copolymer und ihre Natriumsalze (P-AA/MA), Polyethylenglycol (PEG)m Polyvinylalkohol (PVA) und insbesondere Polyvinylpyrrolidon (PVP). Die Beschichtung kann beispielsweise durch Aufsprühen der Polymerlösung und Trocknung erfolgen.

### Gewerbliche Anwendbarkeit

Ein weiterer Gegenstand der Erfindung betrifft die Verwendung der erfindungsgemä-ßen Pulverlackfarben zur Beschichtung von harten Oberflächen, insbesondere Holzuntergründe. Die Tabletten werden lediglich mit Wasser in einen Behälter gegeben, kurz geschüttelt und die so erhaltene Farbe sofort angewendet werden. Die resultierende Lackbeschichtung zeichnet sich dabei durch eine hohe Deckkraft, ausgezeichnete Haftfestigkeit, Kratzfestigkeit und eine effektive Sperrwirkung gegen tanninhaltige Holzbestandteile und andere auswaschbare Substanzen aus. Die Erfindung ermöglicht ferner auch die Herstellung von Beschichtungen in einer breiten Palette von Farbtönen durch ein automatisches Farbdosiermischsystem.

### BEISPIELE

### Beispiele 1 bis 3

### Herstellung der Farbpulver

Zur Herstellung der Pulverfarbe wurden die Bestandteile gemäß **Tabelle 1** in trockener Form in eine Mischvorrichtung gegeben und durch intensives Rühren homogenisiert.

**Tabelle 1**

| Zusammensetzung Farbpulver (alle Angaben in Gramm) | | | |
|---|---|---|---|
| **Komponenten** | **A** | **B** | **C** |
| Polymerdispersionspulver¹ | 300 | - | - |
| Polymerdispersionspulver² | - | 300 | - |
| Polymerdispersionspulver³ | - | - | 300 |
| Titandioxid | 100 | 100 | 100 |
| | | | |
| Calciumcarbonat | 475 | 450 | 375 |
| Cellulosefasern | 50 | 100 | 150 |
| Na-Sulfosuccinat | 5 | 5 | 5 |
| Polyacrylat-Verdicker | 10 | 10 | 10 |
| *Summe* | *1000* | *100* | *1000* |

| | | | |
|---|---|---|---|
| (1) Styrol-Butylacrylat-Copolymerpulver (50 Gew.-% Styrol und 50 Gew.-% n-Butylacrylat) mit 20 Gew.-%, bezogen auf Copolymer, PVA. (2) Methylmethacrylat-Butylacrylat-Copolymerpulver (45 Gew.-% Methylmethacrylat und 55 Gew.-% n-Butylacrylat) mit 19 Gew.-%, bezogen auf Copolymer, PVA (3) n-Butylacrylat-Methylmethacrylat-Vinyllaurat-Copolymerpulver (45 Gew.-% n-Butylacrylat, 40 Gew.-% Methylmethacrylat und 15 Gew.-% Vinyllaurat) mit 10,5 Gew.-%, bezogen auf Copolymer, PVA. | | | |

### Beispiele 3 bis 6, Vergleichsbeispiele V1 bis V6

### Herstellung und Löslichkeit der Kugeltabletten

Die Farbpulver nach Beispiel 1 wurden in eine Kugelmühle gegeben und über 30, 60 und 90 Minuten vermahlen. Nach Sichtung der Pulver zeigten jeweils mehr als 90 Gew.-% die Körnungen gemäß **Tabelle 2.** Die Beispiele 4 bis 6 sind erfindungsgemäß, die Beispiele V1 bis V6 dienen zum Vergleich.

**Tabelle 2**

| Mahlanalyse | | | | | | | | | |
|---|---|---|---|---|---|---|---|---|---|
| | **V1** | **V2** | **V3** | **4** | **5** | **6** | **V4** | **V5** | **V6** |
| Farbpulver | A | B | C | A | B | C | A | B | C |
| Mahlzeit [min] | 30 | 30 | 30 | 60 | 60 | 60 | 90 | 90 | 90 |
| Körnung d50* [µm] | 45 | 40 | 35 | 20 | 25 | 12 | 35 | 40 | 30 |

| | | | | | | | | | |
|---|---|---|---|---|---|---|---|---|---|
| * bestimmt nach der Laserbeugungsmethode | | | | | | | | | |

Anschließend wurden die Pulver in einer Tablettiermaschine vom Typ TPR der Firma Syntegon gegeben und zu Kugeln verpresst. Jeweils 450g Tabletten wurden in ein 1-L-Becherglas mit 400 ml Wasser (20 °C, 20 dH) gegeben. Die Lösungen wurde gelinde bewegt (Magnetrührer, 10 UpM) und die Geschwindigkeit gemessen, bis sich die Tabletten vollständig aufgelöst hatten. Die Ergebnisse sind in **Tabelle 3** zusammengefasst.

**Tabelle 3**

| Auflösegeschwindigkeit | | | | | | | | | |
|---|---|---|---|---|---|---|---|---|---|
| | **V1** | **V2** | **V3** | **4** | **5** | **6** | **V4** | **V5** | **V6** |
| Farbpulver | A | B | C | A | B | C | A | B | C |
| Körnung d50* [µm] | 45 | 40 | 35 | 20 | 25 | 12 | 35 | 40 | 30 |
| Auflösung [s] | 22 | 18 | 20 | 7 | 10 | 5 | - | - | - |

| | | | | | | | | | |
|---|---|---|---|---|---|---|---|---|---|
| * bestimmt nach der Laserbeugungsmethode | | | | | | | | | |

Die auf Basis der grobkörnigen Pulver hergestellten Tabletten zeigten eine Auflösegeschwindigkeit von etwa 20 Sekunden, während die Tabletten, die mit Pulver in der erfindungsgemäßen Körnung hergestellt worden waren, sich 3- bis 4mal schneller auflösten. Die mit dem sehr feinen Pulver hergestellten Tabletten waren mechanisch unbeständig.

### Vergleichsbeispiele V7 bis V9

### Herstellung und Löslichkeit verschiedener Tablettenformen

Die Versuche 4, 5 und 6 wurden wiederholt, die Tabletten jedoch in eine quaderförmige Form gebracht und deren Auflösegeschwindigkeit wie oben beschrieben untersucht. Die Ergebnisse sind in **Tabelle 4** zusammengefasst:

**Tabelle 4**

| Auflösegeschwindigkeit | | | | | | |
|---|---|---|---|---|---|---|
| | **4** | **5** | **6** | **V7** | **V8** | **V9** |
| Farbpulver | A | B | C | A | B | C |
| Körnung d50* [µm] | 20 | 25 | 12 | 21 | 23 | 10 |
| Tablettenform | Kugel | | | Quader | | |
| Auflösung [s] | 7 | 10 | 5 | 12 | 13 | 11 |

| | | | | | | |
|---|---|---|---|---|---|---|
| * bestimmt nach der Laserbeugungsmethode | | | | | | |

Die kugelförmigen Tabletten lösten sich etwa doppelt so schnell auf, wie die quaderförmigen Typen.

## Patentansprüche

1. Pulverlackfarben in fester Darreichungsform, dadurch erhältlich oder erhalten, indem man
(i) ein wasserlösliches oder wasserdispergierbares Farbpulver bereitstellt,
(ii) das Farbpulver auf eine Korngröße entsprechend einem d50-Wert von 5 bis 100 µm und vorzugsweise 10 bis 30 µm vermahlt und
(iii) das Pulver aus Schritt (ii) tablettiert und gegebenenfalls
(iv) die Tabletten aus Schritt (iii) mit einem wässrigen und Wasserlöslichen Überzug beschichtet.

2. Pulverlackfarben nach Anspruch 1, **dadurch gekennzeichnet, dass** das Farbpulver aus Schritt (a) trockenen oder sprühgetrockneten Komponenten enthält, die ausgewählt sind aus der Gruppe, die gebildet wird von redispergierbaren Polymerpulvern, Bindemitteln, Pigmenten, Füllstoffen, Netz- und Dispergiermittel, Verdickungsmitteln, Entschäumer, Hydrophobierungsmittel, Filmbildehilfsmittel, pH-Stellmittel sowie Sprengmittel

3. Pulverlackfarben nach den Ansprüchen 1 und/oder 2, **dadurch gekennzeichnet, dass** sie als redispergierbare Polymerpulver (Komponente a) Polymere Acrylsäureester von verzweigten oder unverzweigten Alkoholen mit 1 bis 12 C-Atomen enthalten

4. Pulverlackfarben nach Anspruch 3, **dadurch gekennzeichnet, dass** die Polymere noch weitere Monomere enthalten, die ausgewählt sind aus der Gruppe, die gebildet wird von Methacrylsäureestern von verzweigten oder unverzweigten Alkoholen mit 1 bis 12 C-Atomen, Styrol, Vinylester von verzweigten oder unverzweigten Carbonsäuren mit 2 bis 12 C-Atomen ethylenisch ungesättigte Carbonsäureamide und -nitrile, Diester der Fumarsäure, ethylenisch ungesättigte Sulfonsäuren und deren Salze sowie Mischungen davon..

5. Pulverlackfarben nach mindestens einem der Ansprüche 1 bis 4, **dadurch gekennzeichnet, dass** sie als Bindemittel (Komponente b) Zement, Gips und/oder Kalk und/oder enthalten.

6. Pulverlackfarben nach mindestens einem der Ansprüche 1 bis 5, **dadurch gekennzeichnet, dass** sie als Pigmente (Komponente c) Titandioxid, Bariumsulfat, Bornitrid und/oder Zinkoxid enthalten.

7. Pulverlackfarben nach mindestens einem der Ansprüche 1 bis 6, **dadurch gekennzeichnet, dass** sie als Füllstoffe (Komponente d) Calciumcarbonat, Quarzmehl, Feldspat, Kaolin, Talkum und/oder Cellulosefasern enthalten.

8. Pulverlackfarben nach mindestens einem der Ansprüche 1 bis 7, **dadurch gekennzeichnet, dass** das Farbpulver aus Schritt folgende Zusammensetzung aufweist:
(a) etwa 10 bis etwa 40 Gew.-% redispergierbares Polymerpulver
(b) etwa 0,1 bis etwa 10 Gew.-% Bindemittel;
(c) etwa 1 bis etwa 35 Gew.-% Pigmente; und
(d) etwa 20 bis etwa 95 Gew.-% Füllstoffe,
wobei sich die Mengenangaben gegebenenfalls mit weiteren Hilfs- und Zusatzstoffen zu 100 Gew.-% ergänzen.

9. Pulverlackfarben nach mindestens einem der Ansprüche 1 bis 8, **dadurch gekennzeichnet, dass** die Tablette die Form einer Kugel aufweist.

10. Verfahren zur Herstellung von Pulverlackfarben in fester Darreichungsform, umfassend oder bestehend aus den folgenden Schritten:
(i) Bereitstellen eines wasserlöslichen Farbpulvers,
(ii) Vermahlen des Farbpulvers auf eine Korngröße entsprechend einem d50-Wert von 5 bis 100 µm und vorzugsweise 10 bis 30 µm und
(ii) Tablettierung des Pulvers aus Schritt (ii) sowie gegebenenfalls
(iv) Beschichtung der Tabletten aus Schritt (iii) mit einem wässrigen und wasserlöslichen Überzug.

11. Verfahren nach Anspruch 10, **dadurch gekennzeichnet, dass** man die Farbpulver in einer Kugel- oder Planetenmühle vermahlt.

12. Verfahren nach den Ansprüchen 10 und/oder 11, **dadurch gekennzeichnet, dass** man die vermahlenen Pulver zu einer Tablette verpresst.

13. Verfahren nach Anspruch 12, **dadurch gekennzeichnet, dass** man die vermahlenen Pulver zu einer Tablette verpresst, die eine Kugelform aufweist.

14. Verwendung der Zubereitungen nach Anspruch 1 oder der nach Anspruch 10 erhältlichen Zubereitungen für die Beschichtung von harten Oberflächen.

15. Verwendung nach Anspruch 14, **dadurch gekennzeichnet, dass** diese harten Oberflächen Holzuntergründe darstellen.
